# EUROPEAN PATENT APPLICATION

(11) **EP 4 610 004 A1**
(43) Date of publication of application: **03.09.2025**
(21) Application number: 24382226.9
(22) Date of filing: 01.03.2024
(51) Int. Cl.: B25J 15/00, B65G 59/00, B65G 59/02, B65G 61/00

(54) **METHOD AND DEVICE FOR DEPALLETISING BUNDLES OF EMPTY SACKS**

(71) Applicant: Mecanizacion Del Transporte Y Almacenaje Industrial, S.L., 17400 Breda-Girona (ES)
(72) Inventor: COLOMER XENA, Isaac, 17400 BREDA-GIRONA (ES)
(74) Representative: Urizar Villate, Ignacio

(57) **Abstract**

The present invention relates to a device for depalletising bundles of empty sacks comprising a gripping unit (4), located at the end of a robotic arm of a palletiser that moves it over the bundles of sacks (6, 7) stacked on a pallet to a table or conveyor, comprising fixed and retractable pressure pads (1, 2), which press on the bundles of sacks (6, 7), creating a gap between them by flexing the ends of the top bundle (6) upwards. In this position, support means for supporting the top bundle of sacks (6) are inserted, and gripping means for gripping same, which when pressed against the lower base of the gripping unit (4), allow it to be moved to the target position.

## Description

### Technical field

The invention falls within the field of transportation, packaging, storage and handling of thin materials; especially machines, apparatus or methods adapted for packaging articles or materials having particular problems, or for packaging operations, for example to group or ungroup articles, to depalletise materials or articles, especially thin and flexible ones.

The invention relates to a method and a device for taking bundles of sacks from a pallet, on which they are stacked, to place them on a table or conveyor.

### State of the art

The devices and methods for palletising sacks or bags are well known and there is a wide selection on the market. A device with these features, starting from a stack of sacks, transfers them individually or in groups to the base of a pallet for palletization, a process in which the corresponding group of sacks is lifted and moved until it is above the pallet and, when the intended position is reached, it deposits them on said pallet with a vertical downward movement. For example, document DE102013101137 (A1) relates to a device for palletising stacks of sacks, which comprises a palletising area that is used to load at least one pallet with stacks of sacks. Regarding document DE102005049964 (A1), it describes a method for loading pallets with stacks of flat objects comprising: loading at least one pallet in a palletising area, arranging the stacks on a pallet with a loading device, guiding the stacks towards the loading device with a feeding device and loading a pallet with a clamp-type gripping device.

The reverse process, called depalletization, consists of unloading a pallet by emptying its contents onto a table or conveyor. This operation, like palletization, is generally carried out by means of a robotic arm that has at the end a device, located at the end of said robotic arm, which when placed on the product collects it by vacuum effect and drags it from the collection point to a deposit point where it is generally left to fall under its own weight. Document US2006182607 (A1) describes a device with these features.

Other depalletising devices for unloading a pallet have a clamp that can be rotated and positioned in relation to the pallet, by means of which it holds the load, and a positioning device that allows the pallet to be gradually unloaded onto the appropriate surface. For example, document EP2899149 describes a device with these features.

In general, the known depalletising devices unload boxes or sacks full of product from the pallets, but they are not used in depalletising bundles of empty sacks since, as these form a flexible package, which are not necessarily packaged by means of a rigid or semi-rigid packaging, are impossible to pick up by conventional means. Consequently, the depalletisation of empty sacks, or bundles of empty sacks, is usually carried out manually.

### Description of the invention

Based on the state of the art, one objective of the present invention is to provide a depalletising device for empty sacks, which allows the bundle of sacks to be held from the four corners or the four planes, which enables operation without the need to use human means for this task, using any standard palletiser, without even requiring special programming for this task.

In order to achieve the proposed objectives, which are mentioned in the previous section, the invention proposes a device for depalletising bundles of empty sacks from a pallet, which has the features of claim 1.

This device frees people from doing routine work, allowing them to dedicate their time to cleaning and monitoring the assembly of packaging machines, in addition to considerably increasing production. The device is designed to be coupled to a standard robot or other palletising device and its operation is controlled by an electronic system that allows the best placed bundle to be stopped, transmitting the coordinates to the robot, so that it goes to the appropriate position to pick up the bundle. The robot that incorporates this device moves to the appropriate position, moves downwards, grasps the bundle and takes it to the receiving table or conveyor.

This device provides a special mechanism to lift the bundle of sacks that is located at the top by means of at least two of the corners and lateral edges thereof, in order to insert into that gap a support and gripping means for supporting and gripping said bundle, holding it against the base of the gripping unit that makes up the structure of this device, in order to move it to the target position once suitably gripped. Said mechanism consists of two pressure pads that emerge from below said gripping unit, which press on the two bundles of sacks located above the stack of sacks. The bundle of sacks located at the top is pressed downwards by a retractable pressure pad, while a fixed pressure pad acts on the bundle located immediately below the first. In this way, a gap is created between both bundles of sacks that causes the upward bending of the ends of the top bundle, creating a gap between both bundles.

From this situation, using support means for supporting the top bundle of sacks, and gripping means for gripping same, holding it against the lower base of the gripping unit of the device, it is possible to transfer the bundle located until now on top to its new location off the pallet on which it is stacked.

One of the advantages of this system is that it allows the bundle of sacks to be picked up from the four corners or the four planes and that the choice of which bundle of sacks to pick up at each moment is made by the algorithm of the program that indicates which one is the best placed bundle in terms of height and position in order to direct the robot to the corresponding coordinates, which allows it to work with the majority of standard palletisers, without requiring special programming for stacking sacks.

Likewise, the invention also proposes a method for depalletising bundles of empty sacks from a pallet, which has the features of claim 6.

### Description of the drawings

As a complement to the description provided herein, and for the purpose of helping to make the features of the invention more readily understandable, the present specification is accompanied by a set of drawings which, by way of illustration and not limitation, represent the following:

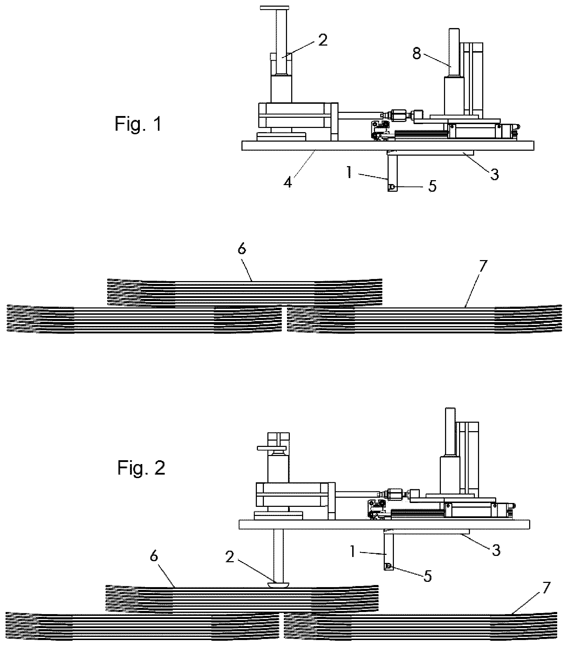

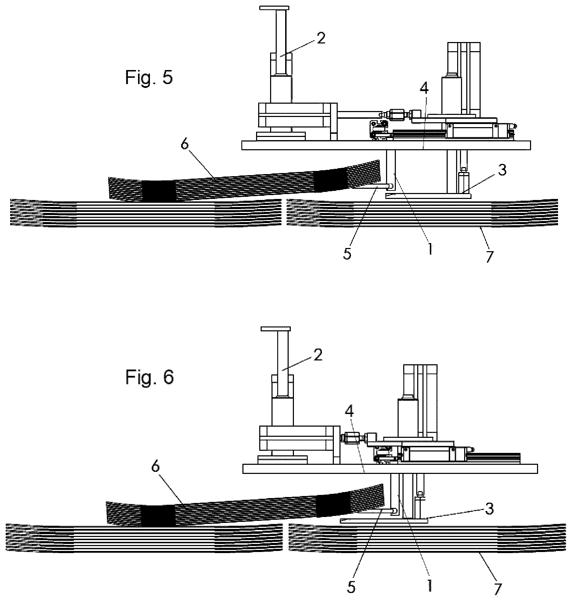

Figures 1-7 show the sequence of gripping a bundle of sacks (6) from a stack of sacks to the lifting thereof by the gripping unit (4), for transfer to a table or conveyor.

### Embodiment of the invention

As can be seen in the referenced figures, the device for depalletising bundles of empty sacks consists of a gripping unit (4), which is fastened at the end of a robotic arm that handles and moves over the bundles of sacks (6, 7) stacked on a pallet, gripping each bundle of sacks one by one and moving it to a table or conveyor, where they will be handled in the desired way in each case.

The aforementioned gripping unit (4) comprises a flat surface, below which pressure pads (1, 2) emerge, the function of which is to press on the bundles of sacks (6, 7) located at the top of the stack of sacks or bundles of sacks. One of these pressure pads (2) is retractable and acts on the bundle (6) located at the top, while the other pressure pad (1) is fixed and acts on the bundle (7) located immediately below the first. This results in that when said bundles (6, 7) are pressed, a gap is created therebetween by flexing the ends of the top bundle (6) upwards, making it possible to insert a gripping means for gripping said bundle of top sacks (6).

As can be seen in the figures, the retractable pressure pad (2) is actuated by a cylinder that moves it from a position close to or coinciding with the lower base of the gripping unit (4) to a position below the same in which it presses the bundle of sacks (6) located at the top, to a position slightly above the bundle of sacks (7) located immediately below the top bundle (6).

Once the two pressure pads (1, 2) have lifted the top bundle of sacks (6) above the bundle of sacks (7) located immediately below, the device provides support means for supporting the top bundle of sacks (6) in this position, which acts before gripping means for gripping said bundle of sacks (6), pressing it against the lower base of the gripping unit (4). At this point there are several options:
- The support and gripping means for supporting and gripping the bundle of sacks (6) are the same.
- The support and gripping means for supporting and gripping the bundle of sacks (6) are two completely independent mechanisms. (This is the solution represented in the figures).

The figures show support means for supporting the top bundle of sacks (6) consisting of a pawl (5), which is provided with movement means, that either rotates horizontally from the position in which it is located below the bundle of sacks (6) located at the top to an orthogonal position with respect to the previous position in which it is outside the base of said top bundle of sacks (6), and vice versa; or moves in a longitudinal direction with respect to the top bundle of sacks (6) to be located below it or outside of it.

In one embodiment, this pawl (5) could also be provided with a movement from a position in which it is located below the bundle of sacks (6) located at the top, in the gap enabled due to the action of the pressure pads (1, 2), to an elevated position in which it presses the top bundle of sacks (6) against the lower base of the gripping unit (4), until it is suitably gripped, and thus be able to move it to the target position.

In another alternative embodiment, the pawl (5) does not form the gripping means for gripping the top bundle of sacks (6), so it is necessary to have gripping means for gripping the top bundle of sacks (6) by pressing it against the lower base of the gripping unit (4). In this case, a fork (3) is provided, located below the lower base of the gripping unit (4), which is provided with a rotation or displacement movement along said gripping unit (4), such that it is possible to place it below the top bundle of sacks (6), or outside thereof, either by turning it towards a side or by moving it longitudinally with respect to said bundle of sacks (6). In addition, said fork (3) must also be equipped with an upward movement, such that once it is inserted below the bundle of sacks (6), it lifts until it is trapped against the lower plate (4) of the device, thereby forming a clamp that allows said bundle of sacks (6) to be moved to the target position.

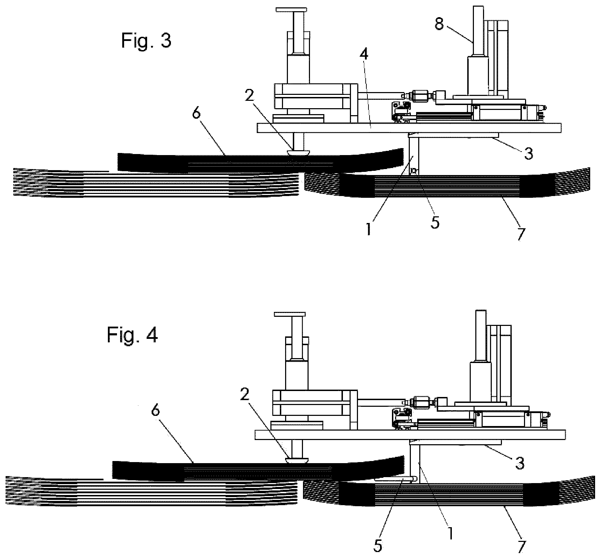

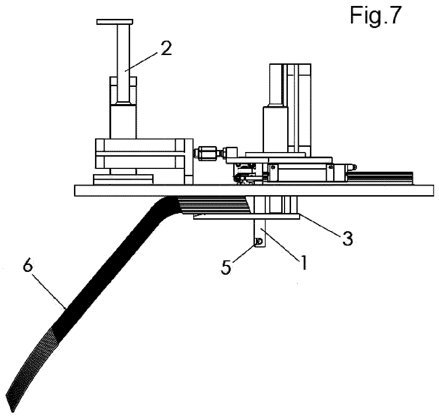

The method for depalletising bundles of empty sacks comprises the following steps, which have been represented in the sequence of figures:
a) Positioning a gripping unit (4) located at the end of a robotic arm of a palletiser until it is located over the stacked bundles of sacks (6, 7). (Figure 1).
b) Lowering said gripping unit (4) until it presses on the bundle (6) located at the top by means of a retractable pressure pad (2) and the bundle (7) located immediately below it by means of a fixed pressure pad (1), until forming an end gap therebetween. (Figures 2-3).
c) Inserting a pawl or fork below the top bundle (6) to hold it, separated from the lower bundle (7), and retracting the retractable pressure pad (2) upwards, releasing the pressure on the top bundle (6). (Figures 4-6).
d) Pressing the top bundle (6) against the lower plate of the gripping unit (4), keeping it trapped in this position until it is moved to the target position. (Figure 7).
e) Returning the gripping unit (4) and the support and pressing means for supporting and pressing the top bundle (6) to the standby position thereof. (Figure 1)

Having described the nature of the invention, as well as a preferred embodiment, it is obvious that the invention is susceptible of industrial application in the indicated sector.

Likewise, it is hereby stated for all appropriate purposes that the materials, shape, size, and arrangement of the described elements can be modified, provided that this does not entail an alteration of the essential features of the invention claimed below:

## Claims

1. A device for depalletising bundles of empty sacks comprising a gripping unit (4), located at the end of a robotic arm that moves it over the bundles of sacks (6, 7) stacked on a pallet to a table or conveyor, wherein said gripping unit (4) comprises:
- pressure pads (1, 2), which emerge from below said unit (4), suitable for pressing on the bundles of sacks (6, 7), of which a retractable pressure pad (2) acts on the bundle (6) located at the top, while a fixed pressure pad (1) acts on the bundle (7) located immediately below the previous bundle, such that upon pressing on said bundles (6, 7) a gap is created between them, by flexing the ends of the top bundle (6) upwards,
- support means for supporting the top bundle of sacks (6), equipped with an actuation from a position in which they are located below the bundle of sacks (6) located at the top, in the gap enabled due to the action of the pressure pads (1, 2), to a position outside the base of said top bundle of sacks (6), and vice versa,
- gripping means for gripping the top bundle of sacks (6), pressing it against the lower base of the gripping unit (4), such that it can be moved to the target position once it is suitably gripped.

2. The device, according to claim 1, wherein the support means for supporting the top bundle of sacks (6) consist of a pawl (5), provided with movement means rotating from the position in which it is located below the bundle of sacks (6) located at the top, to an orthogonal position with respect to the previous position in which it is outside the base of said top bundle of sacks (6), and vice versa.

3. The device, according to claim 2, wherein the pawl (5) is provided with actuation means, moving closer to or away from the lower base of the gripping unit (4), forming in and of itself the gripping means for gripping the top bundle of sacks (6), pressing it against the lower base of the gripping unit (4), to move it to the target position.

4. The device, according to any of claims 1 to 2, wherein the gripping means for gripping the top bundle of sacks (6) consist of a fork (3), located below the lower base of the gripping unit (4), equipped with:
a rotation or displacement movement along said gripping unit (4), suitable for placing it below the top bundle of sacks (6), or outside thereof,
an upward movement, until it traps the top bundle of sacks (6) against the lower plate (4) of the device, being ready to move the bundle of sacks to the target position.

5. The device, according to any of the preceding claims, wherein the retractable pressure pad (2) is actuated by a cylinder that moves it from a position close to or coinciding with the lower base of the gripping unit (4) to a position below the same in which it presses the bundle of sacks (6) located at the top, a position located slightly above the bundle of sacks (7) located immediately below the top bundle.

6. A method for depalletising bundles of empty sacks comprising the following steps:
- positioning a gripping unit (4) located at the end of a robotic arm until it is located over the stacked bundles of sacks (6, 7),
- lowering said gripping unit (4) until it presses on the bundle (6) located at the top by means of a retractable pressure pad (2) and the bundle (7) located immediately below it by means of a fixed pressure pad (1), until forming an end gap therebetween,
- inserting a pawl or fork below the top bundle (6) to hold it, separated from the lower bundle (7), and retracting the retractable pressure pad (2) upwards, releasing the pressure on the top bundle (6),
- pressing the top bundle (6) against the lower plate of the gripping unit (4), keeping it trapped in this position until it is moved to the target position,
- returning the gripping unit (4) and the support and pressing means for supporting and pressing the top bundle (6) to the standby position thereof.
